# EUROPEAN PATENT APPLICATION

(11) **EP 4 610 073 A1**
(43) Date of publication of application: **03.09.2025**
(21) Application number: 24160659.9
(22) Date of filing: 29.02.2024
(51) Int. Cl.: B60H 1/00, B60K 11/04

(54) **A HEAT EXCHANGE ARRAY**

(71) Applicant: VALEO SYSTEMES THERMIQUES, 78320 Le Mesnil Saint-Denis (FR)
(72) Inventor: BELZOWSKI, Michal, 32 050 Skawina (PL); STRAMECKI, Tomasz, 32 050 Skawina (PL)
(74) Representative: Valeo Powertrain Systems

(57) **Abstract**

The object of the invention is, inter alia, a heat exchange array (1000) for a motor vehicle comprising a first heat exchanger (100) comprising a first core (105) for a circulation of at least first fluid therein, the first core (105) comprising a plurality of first heat exchange elements (105a) stacked in a first stacking direction, and at least one second heat exchanger (200) for circulation of at least second fluid therein, the second heat exchanger (200) further comprising a second core (205) comprising a plurality of second heat exchange elements (205a) stacked in a second stacking direction, the second stacking direction being substantially parallel with respect to the first stacking direction, wherein the cores (105, 205) are fixed directly to a baseplate (500), wherein the array (1000) further comprises a first puzzle plate (150) fixed to the first core (105) so that the first core (105) is sandwiched between the first puzzle plate (150) and the baseplate (500), and the second puzzle plate (250) fixed to the second core (205) so that the second core (205) is sandwiched between the second puzzle plate (250) and the baseplate (500), wherein the puzzle plates (150, 250) are configured to at least partially immobilize the second heat exchanger (200) with respect to the first heat exchanger (100) in at least a third direction, the third direction being normal at least to the first stacking direction.

## Description

### FIELD OF THE INVENTION

The invention relates to a heat exchange array. In particular, the invention relates to a heat exchange array for a motor vehicle.

### BACKGROUND OF THE INVENTION

The OEMs trend to pursue more compact and cost effective air conditioning modules. This forces constructors (suppliers) to integrate the sub-components effectively. In the currently applied solutions the distribution manifold may be connected to heat exchangers directly via rubber hoses conducting coolant (or sometimes also refrigerant). Increased integration can be carried out by integrating few exchanger at one core or integration of heat exchangers between coolant and refrigerant manifold. This may lead to several disadvantages, namely high level of complicity of the sub-components, a need to use very precise and expensive tooling, and lots of potential issues during the assembly.

Moreover, when two or more heat exchangers arranged very close to each other are subject to different rates of thermal expansion and/or contraction as the heat exchangers may operate in different modes and in different fluids. This may lead even to failure of one of the heat exchangers and leakage of the fluid to the environment.

Some heat exchangers may be connected together at the bottom and at the top of the core via so-called common plate. Common plates are good for integration, however it still has drawbacks related to thermal expansion of components in operational mode of the heat exchangers.

As each of the heat exchanger usually comprises spigots or nozzles which allow connecting said heat exchangers to the loop. However, when using the common plate the expansion of at least one of the cores may be limited, leading to cracks therein and consequently, leakage. Further the common plates provide the heat exchange between the cores of the heat exchangers which may severely impact the performance.

Thus, there is a need to provide a heat exchanger which will compensate the thermal expansion of the core.

There is another need to provide a heat exchanger which would provide a thermal insulation between the cores of the heat exchangers.

### SUMMARY OF THE INVENTION

The object of the invention is, inter alia, a heat exchange array for a motor vehicle comprising a first heat exchanger comprising a first core for a circulation of at least first fluid therein, the first core comprising a plurality of first heat exchange elements stacked in a first stacking direction, and at least one second heat exchanger for circulation of at least second fluid therein, the second heat exchanger further comprising a second core comprising a plurality of second heat exchange elements stacked in a second stacking direction, the second stacking direction being substantially parallel with respect to the first stacking direction, wherein the cores are fixed directly to a baseplate, wherein the array further comprises a first puzzle plate fixed to the first core so that the first core is sandwiched between the first puzzle plate and the baseplate, and the second puzzle plate fixed to the second core so that the second core is sandwiched between the second puzzle plate and the baseplate, wherein the puzzle plates are configured to at least partially immobilize the second heat exchanger with respect to the first heat exchanger in at least a third direction, the third direction being normal at least to the first stacking direction.

Advantageously, the first puzzle plate is at the same level as the second puzzle plate, wherein said level is determined in perpendicular with respect to the first stacking direction.

Advantageously, the first plate comprises a first projection protruding outwardly form said first plate, and the second plate comprises a second nest, the second nest being configured to at least partially accommodate the first projection.

Advantageously, the first projection comprises a first portion and a second portion, wherein the first portion protrudes directly form the first puzzle plate, and the second portion protrudes directly from the first portion, so that the first portion is arranged between the first puzzle plate and the second portion.

Advantageously, the first portion comprises a first cross-section and the second portion comprises at least one second cross- section, wherein the second cross-section is larger than the first cross-section.

Advantageously, at least one first projection and the second nest are of substantially trapezoidal shape, wherein the nest is complementary to the first projections.

Advantageously, the first projections wherein at least one first projection and the second nest are of substantially trapezoidal shape, wherein the nest is complementary to the first projections.

Advantageously, the baseplate is substantially flat in its entirety, so that the first core and the second core are at the same level at least on one side.

Advantageously, the baseplate comprises a first base potion, wherein the first base potion is in contact with the first heat exchanger , at least a second base portion, wherein the second base portion is in contact with the second heat exchanger, and a third base potion configured to connect the first base portion and the third base portion so that the and the third base portion are at different levels.

Advantageously, comprising at least one third heat exchanger, the third heat exchanger comprising a third core comprising a plurality of third heat exchange elements stacked in a third stacking direction, the third stacking direction being substantially parallel with respect to the first stacking direction.

Advantageously, the baseplate further comprises a fourth base potion, wherein the fourth base potion is in contact with the third heat exchanger and a fifth base portion configured to connect the fourth base portion and the second base portion so that the fourth base portion and the first base portion are at the same level and wherein the second base portion is at the different level than the fourth base portion and the first base portion.

Advantageously, the baseplate further comprises a fourth base potion, wherein the fourth base potion is in contact with the third heat exchanger and a fifth base portion configured to connect the fourth base portion and the second base portion so that the fourth base portion and the first base portion are at different levels and wherein the second base portion is at the different level than the fourth base portion and the first base portion.

### BRIEF DESCRIPTION OF DRAWINGS

Examples of the invention will be apparent from and described in detail with reference to the accompanying drawings, in which:

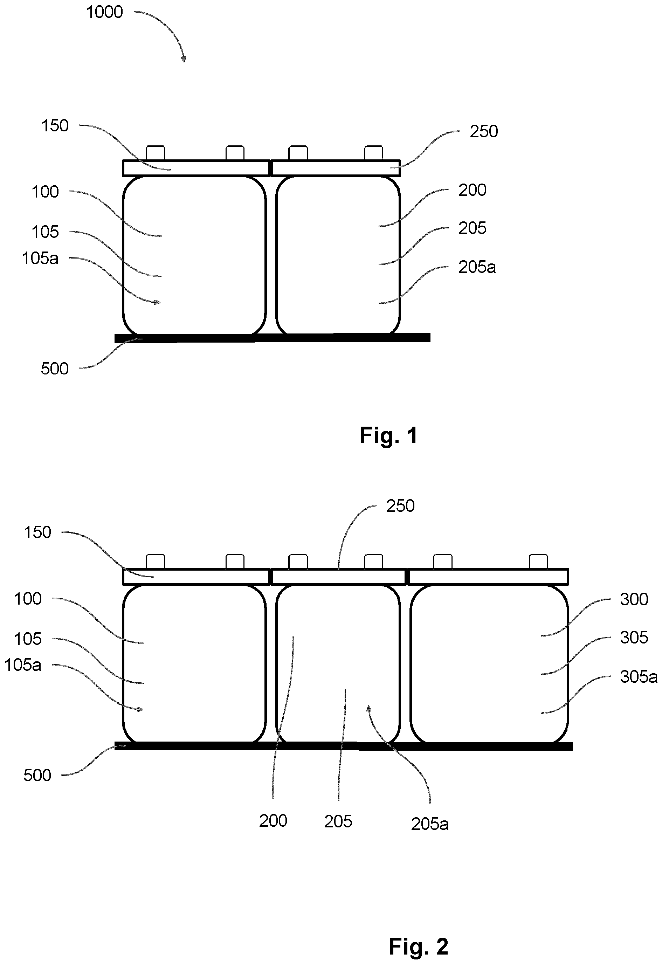

Fig. 1 shows a schematic view of the array comprising two heat exchangers on the baseplate.
Fig. 2 shows a schematic view of the array comprising three heat exchangers on the baseplate.

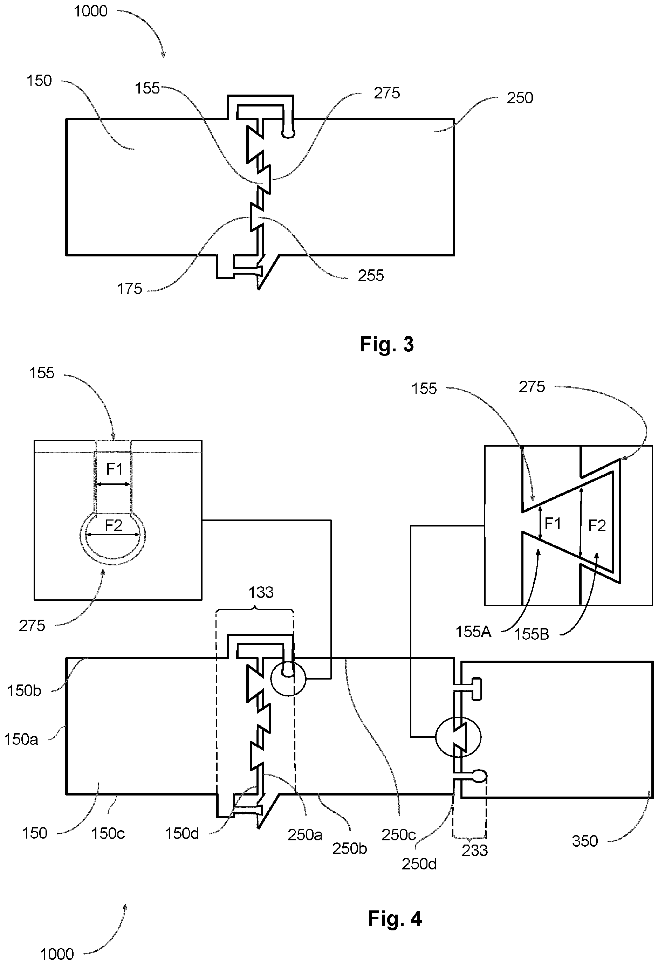

Fig. 3 shows a schematic view of the first puzzle plate and a second puzzle plate arranged together.
Fig. 4 shows a schematic view of the first puzzle plate, a second puzzle plate and a third puzzle plate arranged together with the detailed view of some of the protrusions and nests.

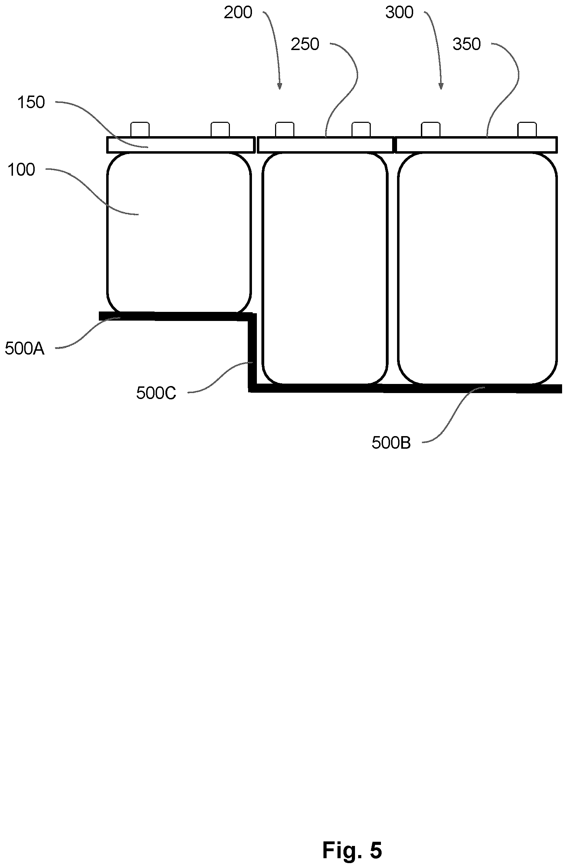

Fig. 5 shows a schematic view of the three heat exchangers, wherein one of the heat exchangers has smaller core than the other two.

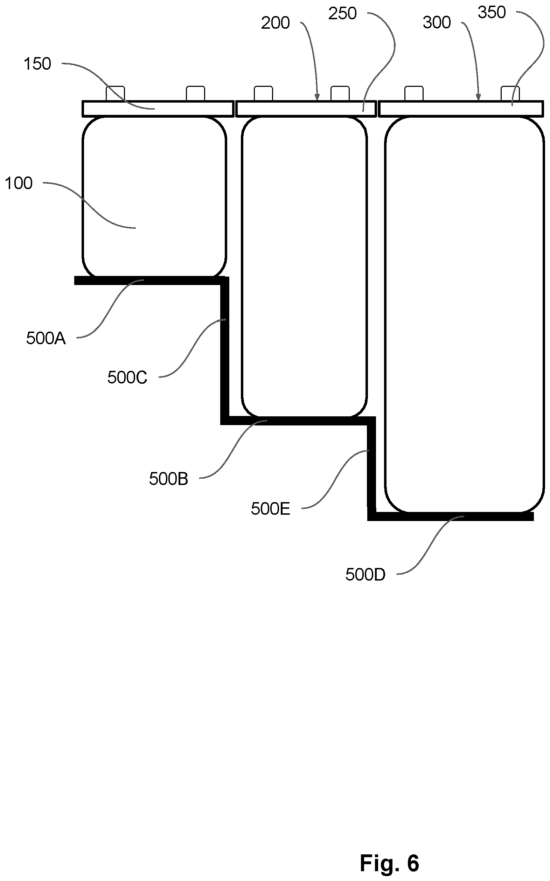

Fig. 6 shows a schematic view of the three heat exchangers in cascading arrangement, wherein all heat exchangers have different cores.

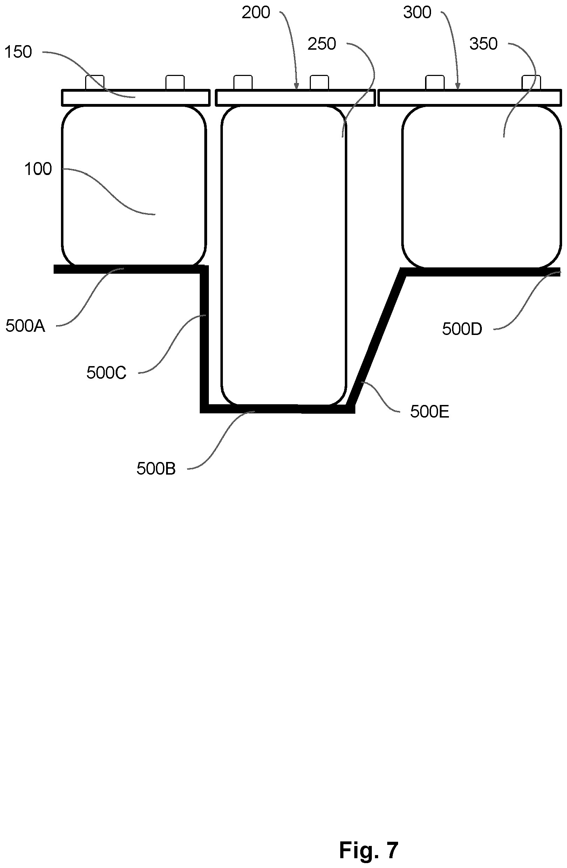

Fig. 7 shows a schematic view of the three heat exchangers, wherein the lateral heat exchangers have the same core size, and the middle one is bigger.

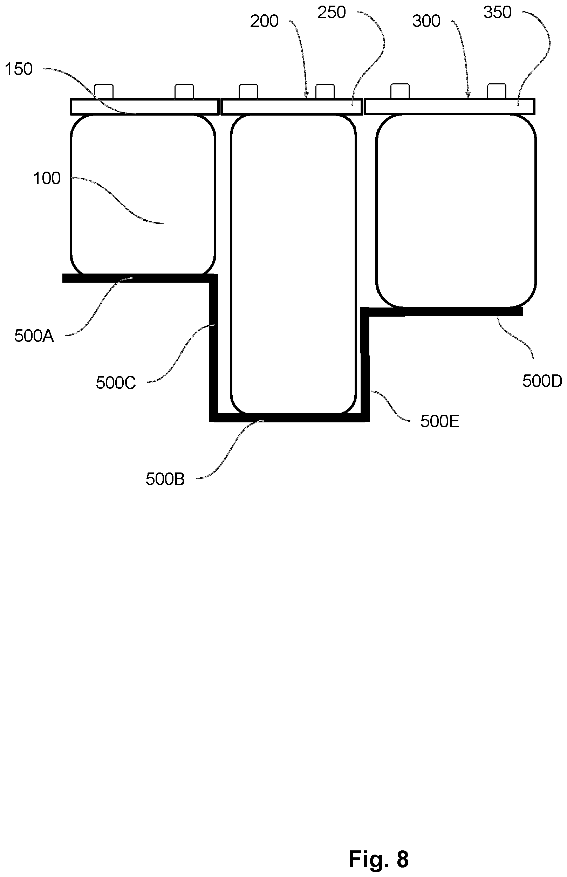

Fig.8 shows a schematic view of the three heat exchangers, wherein all heat exchangers have different cores and the greatest one is arranged between the other two.

### DETAILED DESCRIPTION OF EMBODIMENTS

The subject-matter of the invention is, among other, a heat exchange array 1000 for a motor vehicle. Term "array" may be regarded as the assembly of several components arranged in a particular manner whereas such components are per se suitable for operation independently.

The array 1000 may comprise a first heat exchanger 100 comprising a first core 105 for a circulation of at least first fluid therein. The first fluid may be, for example, a refrigerant or a coolant. The type of the first fluid may be selected depending on the application of the first heat exchanger 100. In order to provide the circulation of at least the first fluid in the heat exchanger 100, the first core 105 may comprise a plurality of first heat exchange elements 105a. The first heat exchange elements 105a may be, for example, a stamped plates. The first heat exchange elements 105a may be stacked in a first stacking direction so that each consecutive plate fixed to the core 100 provides a fluid- tight conduit for the fluid. In general, the stacking direction may be substantially perpendicular to a general plane of the first heat exchange elements 105a.

Similarly, the array 1000 may further comprise at least one second heat exchanger 200 for circulation of at least second fluid therein. The second fluid may be, for example, a refrigerant or a coolant. The type of the second fluid may be selected depending on the application of the second heat exchanger 200. For instance, the first and the second fluid may be circulating in the second heat exchanger 200 simultaneously. In order to provide the circulation of at least the second fluid in the array 1000, the second heat exchanger 200 may further comprise a second core 205. The second core 205 may further comprise a plurality of second heat exchange elements 205a stacked in a second stacking direction. The second heat exchange elements 205a may be, for example, stamped plates arranged analogically to first heat exchange elements 105a, i.e. the second heat exchange elements 205a so that each consecutive plate fixed to the core 100 provides a fluid- tight conduit for the fluid. In general, the stacking direction may be substantially perpendicular to a general plane of the second heat exchange elements 205a. The second stacking direction may be substantially parallel with respect to the first stacking direction.

In one of the examples, the array 1000 may further comprise at least one third heat exchanger 300. The third heat exchanger 300 is not compulsory for carrying out the invention and it should be noted that term "at least one second heat exchanger 200" which has been already used describes precisely that the array 1000 may comprise further heat exchanger i.e. the third heat exchanger 300, not the "second second heat exchanger". Same refers to term "at least one third heat exchanger 300- it means that the array 1000 may further comprise a fourth, fifth heat exchanger, etc.

Similarly to the first and second heat exchangers 100, 200, the third heat exchanger 300 may comprise a third core 305 comprising a plurality of third heat exchange elements 305a stacked in a third stacking direction, the third stacking direction being substantially parallel with respect to the first stacking direction. The third heat exchanger 300 may be for circulation of at least third fluid therein. The first fluid and/or the second fluid may also circulate therein. The third fluid may be, for example, a refrigerant or a coolant. The type of the third fluid may be selected depending on the application of the third heat exchanger 300. In order to provide the circulation of at any of the first, second or third fluid in the third heat exchanger 300, it may further comprise a third core 305. The third core 205 may further comprise a plurality of third heat exchange elements 305a stacked in a third stacking direction. The third heat exchange elements 305a may be, for example, stamped plates arranged analogically to first heat exchange elements 105a, i.e. the third heat exchange elements 305a so that each consecutive plate fixed to the third core 305 provides a fluid- tight conduit for the fluid. In general, the stacking direction may be substantially perpendicular to a general plane of the third heat exchange elements 305a. The third stacking direction may be substantially parallel with respect to the first and/or second stacking direction.

It should be noted that the first fluid, second fluid or even a third fluid should not be limited to the type of the fluid such as refrigerant or coolant, but they can also be distinguished by the parameters, depending on the application. For instance, in case the first heat exchanger 100 is water condenser (WCDS) and the second heat exchanger 200 serves as the sub-cooling section of said WCDS, the first fluid of the first heat exchanger may be regarded as the second fluid in the second heat exchanger 200 as it has different parameters.

In case where the first heat exchanger 100 is WCDS and the second heat exchanger 200 is the chiller, the first fluid circulating in the first heat exchanger 100 may have different parameters than the one flowing in the second heat exchanger 200. In other words, terms first fluid and second fluid may be used interchangeably depending on the application.

In order to arrange the heat exchangers 100, 200 on the array 1000, the respective cores 105, 205, 305 may be fixed directly to a baseplate 500. The baseplate 500 in not only a structural support for the heat exchangers 100, 200, 300 but also allows arranging them next to each other in a desired manner. The baseplate 500 may be connected directly to the first core 105 and/or at least the second core 205 and/ or the third core 305. Thus, the baseplate 500 may also serve as the closing plate for the first fluid and/or the second and/or the third fluid circulating in the cores 105, 205, 305. Alternatively, at least one of the cores 105, 205, 305 may be fixed to the baseplate indirectly, i.e. there may be at least one sub-component located in-between the baseplate 500 and any of the cores 105, 205, 305. Such a sub-component may, for example, an additional closing plate which allows to provide a fluid-tight core 105, 205, 305 before fixing it to the baseplate 500. In such scenario the problem of sealing the cores 105, 205, 305 with the baseplate 500 is mitigated, but it may increase overall packaging and weight of the entire array 1000.

In operation, i.e. when the array 1000 is connected to the loop and the fluids may circulate, the heat exchangers 100, 200 may undergo a thermal expansion or contraction. It must be noted that for the most part all relationships between the sub-components of the array 1000 are described in non-operational mode, i.e. the thermal expansion or contraction does not affect how the description should be perceived, unless stated otherwise. The non-operational mode may be regarded as the state of the array 1000, in which it is mounted on a vehicle, but the entire array 1000 has the same temperature as ambient temperature, or even as the standalone array 1000 in which there are no fluids.

As the array 1000 may undergo a thermal expansion, it would be desired to minimize the heat transfer between the heat exchangers 100, 200, 300. Further, the thermal expansion may negatively affect the arrangement of nozzles which allows ingress and/or egress of the first or second fluid. This may result in a leakage caused by uneven thermal expansion of neighboring heat exchangers 100, 200, 300.

In order to mitigate these disadvantages, the array 1000 may further comprise a first puzzle plate 150.

The first puzzle plate 150 may be fixed to the first core 105 so that the first core 105 is sandwiched between the first puzzle plate 150 and the baseplate 500.

The array 1000 may further comprise a second puzzle plate 250 fixed to the second core 205 so that the second core 205 is sandwiched between the second puzzle plate 250 and the baseplate 500. The first puzzle plate 150 and the second puzzle plate 250 may also be called shortly a first plate 150 and a second plate 250.

The array 1000 may further comprise a third puzzle plate 350 fixed to the third core 305 so that the third core 305 is sandwiched between the third puzzle plate 350 and the baseplate 500. The first puzzle plate 150, the second puzzle plate 250 and the third puzzle plate 350 may also be called shortly a first plate 150, a second plate 250 and a third plate.

It is sufficient to describe the functioning of the invention based on the first heat exchanger 100 and the second heat exchanger 200, but one should bear in mind that same refers to the third heat exchanger 300 by analogy.

The puzzle plates 150, 250 may be configured to at least partially immobilize the second heat exchanger 200 with respect to the first heat exchanger 100 in at least a fourth direction. The fourth direction may be normal (i.e. perpendicular) at least with respect to the first stacking direction. Similarly, the fourth direction may be normal to the second stacking direction.

Although the first puzzle plate 150 and the second plate 250 do not engage with each other, it preferable that the first plate 150 is at the same level as the second puzzle plate 250. This allows the first plate 150 to engage with the second plate 250 in operational mode of the array 1000. In other words, the first plate 150 and the second plate may interact with each-other in operational mode. The same level should be understood as the parallel arrangement of the first plate 150 and the second plate 250, such as coplanar arrangement of two. In simple words, the same level is determined in perpendicular with respect to the first stacking direction or the second stacking direction.

The first plate 150 and the second plate 250 may have a substantially rectangular shape. The term substantially rectangular may refer also to the rectangle with rounded corners, square, or substantially trapezoidal shapes. Therefore, the first plate 150 may comprise four first edges 150a, 150b, 150c and 150d. Similarly, the second plate 250 may comprise four second edges 250a, 250b, 250c and 250d. The analogical features may found in any of the consecutive plates.

The first plate 150 may further comprise a first projection 155 protruding outwardly form said first plate 150. It means that the projection protrudes in a direction perpendicular to the first stacking direction. The first projection 155 enabled forming a frictional connection of the first plate 150 with, for example, the second plate 250. Therefore, the first projection 155 projects towards any of the plates to which it is intended to be attached to. As explained in previous paragraphs, the frictional connection is supposed to appear during the operational mode of the array 1000.

In order to receive the first projection 155 of the first plate 150, the second plate 250 may comprise a second nest 275. The second nest 275 is configured to at least partially accommodate the first projection 155. It means that one part of the first projection 155, usually the one being closed to the second plate 250, may be accommodated in the second nest 275, whereas the other part is not accommodated in the second nest 275. This allows to provide a connection tolerance, so that in non-operational mode or during the mild conditions in operational mode the first plate 150 and the second plate 250 are not in contact with each-other.

Similarly, the second plate 250 may comprise the second projection 255 protruding outwardly from the second plate 250, and the first plate 150 may comprise a first nest 175, the first nest 175 being configured to at least partially accommodate the second projection 255.

The first projection 155 may protrude directly from one of the first edges. For example, the first projection may protrude from the first edge 150d as it is located closest to the second plate 250. Thus the first projection may be regarded as the portion of the first plate 150 which protrudes beyond the outline of the first edge 150d. The first nest 175 may be regarded as any recess in the first plate 150 delimited by the first edge 150d.

In one of the examples, the first projection 155 may protrude directly form one lateral first edge 150b or the other lateral first edge 150c. The first projections 155 must be adapted accordingly in order to be received in the nests 275 on the lateral second edges 250b, 250c, respectively.

Analogically, the second projection 255 may protrude directly from one of the second edges. For example, the second projection may protrude from the second edge 250d as it is located closest to the first plate 150. Thus the second projection may be regarded as the portion of the second plate 250 which protrudes beyond the outline of the second edge 250a. The second nest 275 may be regarded as any recess in the second plate 250 delimited by the second edge 250a.

The nests 175, 275 and the projections 155, 255 may form altogether the first locking zone 133. The first locking zone 133 extends between the edges of respective plates 150, 250 which form the connection via their nests 175, 275 and their projections 155, 255 and is delimited by the first edge 150d and second edge 250a. The same principal of determining next locking zones, for example, a second locking zone 233 between the second plate 250 and the third plate 350.

To facilitate the formation of the connection between the plates 150, 250, the first projection 155 may a first portion 155A and a second portion 155B, wherein the first portion 155A protrudes directly form the first puzzle plate 150, and the second portion 155B protrudes directly from the first portion 155A. This results in that the first portion 155A is arranged between the first puzzle plate 150 and the second portion 155B.

The projections 155, 255 and also the nests 175, 275 may be of different shapes and sized. For example, at least one first projection 155 and the second nest 275 may be of substantially trapezoidal shape. In such scenario, the second nest 275 is complementary to the first projection 155. Similarly, the second projection 255 and a first net 175 may be trapezoidal and they may be complementary. This also includes the tolerances so that the plates 150, 250 are not in contact with each other in non-operational mode of the array 1000. Other shapes, for example, circular are also envisaged.

Accordingly, the first portion 155A may comprise a first cross-section F1 and the second portion 155B may comprise at least one second cross- section F2. The cross sections F1, F2, etc. may be determined parallel with respect to the edges 150d, 250a, where the relevant projections 155, 255 and nests 175, 255 are located. Due to indented function of the projections, the second cross-section F2 may larger than the first cross-section F1 to achieve frictional connection in operational mode. In other words, the cross-section of the projections 155, 255 shall increase in a direction in which said projection 155,255 protrudes.

In order to secure the heat exchanger 100, 200, 300, the array 1000 comprises the baseplate 500. In one of the embodiments, the baseplate 500 is substantially flat in its entirety, so that the first core 105 and the second core 205 are at the same level at least on one side, i.e. on the opposite of the core 105, 205, 305 with respect to the baseplate 500. In other words, the baseplate allows arranging the cores 105, 205, 305 in such a manner that the plates 150, 250, 350 are substantially parallel to each other.

The baseplate 500 may be a substantially planar element. Thus it may comprise only one portion, namely a first base portion 500A. Such a baseplate may receive two or more heat exchangers 100, 200, 300. In this embodiment, the cores 105, 205, 305 of consecutive heat exchangers 100, 200, 300 may be of the similar height, wherein the height of the core is measured between the baseplate 500 and the respective first, second or third plate 150, 250, 350, and in parallel with respect to the first, second, or third stacking directions, respectively.

Alternatively, the cores 105, 205, 305 of consecutive heat exchangers 100, 200, 300 may be of different heights wherein the height of the core is measured between the baseplate 500 and the respective first, second or third plate 150, 250, 350, and in parallel with respect to the first, second, or third stacking directions, respectively. This however requires modifying the baseplate 500 as described in further paragraph.

Accordingly, the baseplate 500 may comprise a first base potion 500A, wherein the first base potion 500A is in contact with the first heat exchanger 100, at least a second base portion 500B, wherein the second base portion 500B is in contact with at least with the second heat exchanger 200, and a third base potion 500C configured to connect the first base portion 500A and the second base portion 500B so that the 500A and the second base portion 500B are at different levels. In order to provide a compact array 1000, the third base portion 500C may be arranged perpendicularly with respect to the first base portion 500A and the second base portion 500B. In other words, there is a right angle between the third base portion 500C and the first base portion 500A and the second base portion 500B, whereas the first base portion 500A is parallel to the second portion 500B. This embodiment also includes that, for example, the first base portion 500A comprises the first heat exchanger 100, and the second base portion is connected to the second heat exchanger 200 and the third heat exchanger, so that they have substantially equal heights of their cores.

Alternatively, the third base portion 500C may be slanted with respect to the first base portion 500A and the second base portion 500B. this mat increase the packaging in the direction perpendicular to the first stacking direction, but may decrease the packaging in a direction parallel to the first stacking direction.. This embodiment also includes that, for example, the first base portion 500A comprises the first heat exchanger 100, and the second base portion is connected to the second heat exchanger 200.

Accordingly, the baseplate 500 may further comprise a fourth base potion 500D, wherein the fourth base potion 500D is in contact with the third heat exchanger 300, and a fifth base portion 500E configured to connect the fourth base portion 500D and the second base portion 500B so that the fourth base portion 500D and the first base portion 500A are at the same level. Consequently, the second base portion 500B is at the different level than the fourth base portion 500D and the first base portion 500A.

Accordingly, the baseplate 500 may comprise a fourth base potion 500D, wherein the fourth base potion 500D is in contact with the third heat exchanger 300, and a fifth base portion 500E configured to connect the fourth base portion 500D and the second base portion 500B. There are several ways in which one may arrange the heat exchangers 100, 200, 300 on the baseplate 500. In one of the examples the fifth base portion 500E configured to connect the fourth base portion 500D and the second base portion 500B may be so arranged, that the fourth base portion 500D and the first base portion 500A are at different level and wherein the second base portion 500B is at the different level than the fourth base portion 500D and the first base portion 500A. This includes a configuration which looks similar to the staircase, or the configuration which forms essentially a letter U or J, i.e. the first base portion 500A is at the first level, the second base portion 500B is lower than the first base portion, and the fourth base potion 500D is at the level between the first base potion 500A and the second base portion 500B. In the staircase configuration, the first base portion 500A may be at the first level, the second base portion 500B may be, for example, at the lower than the first level, and consequently the fourth base portion 500D may be at the lower level than the second base potion 500B and the first base portion 500A.

The invention also includes a motor vehicle comprising at least one array 1000 described above.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A heat exchange array (1000) for a motor vehicle comprising a first heat exchanger (100) comprising a first core (105) for a circulation of at least first fluid therein, the first core (105) comprising a plurality of first heat exchange elements (105a) stacked in a first stacking direction, and at least one second heat exchanger (200) for circulation of at least second fluid therein, the second heat exchanger (200) further comprising a second core (205) comprising a plurality of second heat exchange elements (205a) stacked in a second stacking direction, the second stacking direction being substantially parallel with respect to the first stacking direction, wherein the cores (105, 205) are fixed directly to a baseplate (500), wherein the array (1000) further comprises a first puzzle plate (150) fixed to the first core (105) so that the first core (105) is sandwiched between the first puzzle plate (150) and the baseplate (500), and the second puzzle plate (250) fixed to the second core (205) so that the second core (205) is sandwiched between the second puzzle plate (250) and the baseplate (500), wherein the puzzle plates (150, 250) are configured to at least partially immobilize the second heat exchanger (200) with respect to the first heat exchanger (100) in at least a third direction, the third direction being normal at least to the first stacking direction.

2. The array (1000) according to claim 2, wherein the first puzzle plate (150) is at the same level as the second puzzle plate (250), wherein said level is determined in perpendicular with respect to the first stacking direction.

3. The array (1000) as claimed in any of the preceding claims, wherein the first plate (150) comprises a first projection (155) protruding outwardly form said first plate (150), and the second plate (250) comprises a second nest (275), the second nest (275) being configured to at least partially accommodate the first projection (155).

4. The array (1000) according to claim 3, wherein the first projection (155) comprises a first portion (155A) and a second portion (155B), wherein the first portion (155A) protrudes directly form the first puzzle plate (150), and the second portion (155B) protrudes directly from the first portion (155A), so that the first portion (155A) is arranged between the first puzzle plate (150) and the second portion (155B).

5. The array (1000) according to claim 4, wherein the first portion (155A) comprises a first cross-section (F1) and the second portion (155B) comprises at least one second cross- section (F2), wherein the second cross-section (F2) is larger than the first cross-section (F1).

6. The array (1000) according to any of the preceding claims, wherein at least one first projection (155) and the second nest (275) are of substantially trapezoidal shape, wherein the nest (275) is complementary to the first projections (155).

7. The array (1000) according to any of the preceding claims, wherein the first projections wherein at least one first projection (155) and the second nest (275) are of substantially trapezoidal shape, wherein the nest (275) is complementary to the first projections (155).

8. The array (1000) according to any of the preceding claims, wherein the baseplate (500) is substantially flat in its entirety, so that the first core (105) and the second core (205) are at the same level at least on one side.

9. The array (1000) according to any of claims 1-7, wherein the baseplate (500) comprises a first base potion (500A), wherein the first base potion (500A) is in contact with the first heat exchanger (100), at least a second base portion (500B), wherein the second base portion (500B) is in contact with the second heat exchanger (200), and a third base potion (500C) configured to connect the first base portion (500A) and the third base portion (500B) so that the (500A) and the third base portion (500B) are at different levels.

10. The array (1000) according to any of the preceding claims comprising at least one third heat exchanger (300), the third heat exchanger (300) comprising a third core (305) comprising a plurality of third heat exchange elements (305a) stacked in a third stacking direction, the third stacking direction being substantially parallel with respect to the first stacking direction.

11. The array (1000) according to claims 9 and 10, wherein the baseplate (500) further comprises a fourth base potion (500D), wherein the fourth base potion (500D) is in contact with the third heat exchanger (300) and a fifth base portion (500E) configured to connect the fourth base portion (500D) and the second base portion (500B) so that the fourth base portion (500D) and the first base portion (500A) are at the same level and wherein the second base portion (500B) is at the different level than the fourth base portion (500D) and the first base portion (500A).

12. The array (1000) according to claims 9 and 10, wherein the baseplate (500) further comprises a fourth base potion (500D), wherein the fourth base potion (500D) is in contact with the third heat exchanger (300) and a fifth base portion (500E) configured to connect the fourth base portion (500D) and the second base portion (500B) so that the fourth base portion (500D) and the first base portion (500A) are at different levels and wherein the second base portion (500B) is at the different level than the fourth base portion (500D) and the first base portion (500A).

13. The array (1000) according to any of the preceding claims, wherein the first heat exchanger (100) is water cooled condenser and the second heat exchanger (200) is internal heat exchanger.

14. The array (1000) according to any of the preceding claims, wherein the first heat exchanger (100) is water cooled condenser and the second heat exchanger (200) is a chiller.

15. The array (1000) according to any of the preceding claims, wherein the first heat exchanger (100) is water cooled condenser and the second heat exchanger (200) is the sub-cooler for the first heat exchanger (100).
